# EUROPEAN PATENT APPLICATION

(11) **EP 4 826 609 A1**
(43) Date of publication of application: **21.10.2026**
(21) Application number: 25170876.4
(22) Date of filing: 16.04.2025
(51) Int. Cl.: G06Q 10/04, G06Q 10/087, G06T 7/62

(54) **METHOD AND SYSTEM FOR EXECUTING A DIMENSIONING, STABILITY, POSITIONING AND ORIENTATION ANALYSIS OF A PORTABLE TRANSPORT PLATFORMAND ITS RESPECTIVE LOAD IN A STORAGE SYSTEM**

(71) Applicant: Basstech Engineering Group SL, 08040 Barcelona (ES)
(72) Inventor: Llimargas Barjuan, Eduard, Barcelona (ES)
(74) Representative: Isern Patentes y Marcas S.L.

(57) **Abstract**

Method and system for executing a dimensioning, stability, positioning and orientation analysis of a portable transport platform and its respective load in a storage system, and comprising the following steps or enabled to:
- Portable transport platform analysis, which in turn comprises:
o Establishing the dimensions, position, orientation and handling entry points of the portable transport platform,
o Evaluation of conditions of the portable transport platform.

- Load analysis, which in turn comprises:
o Establishing the volume, contour, position and orientation of the load,
o Evaluation of load stability.

- Engaging, transporting and storing the load after and using these previous analyses.

## Description

### Field of the invention

The present invention relates to a method and system for executing a dimensioning, stability, positioning and orientation analysis of a portable transport platform and its respective load in a storage racking system, enabled to be used above all in industrial environments and storage warehouses. Specifically, the invention focuses on methods and systems conceived to be operated on-board a load handling vehicle, truck or crane, which may be fully automated.

### Background of the invention

In warehouse and industrial environments, load handling systems are employed to facilitate the storage and retrieval of goods.

The loads and also its supporting structures, for example pallets, may present many particular different geometries, which may prevent finding a suitable and sure placing in a specific position of a storage system. Sometimes goods on a portable transport platform may not be properly fixed or restrained and it is therefore critical to ensure that loads are properly stable prior to start the handling procedure.

Storage rack warehouses may be configured in a non-symmetrical or non-regular way requiring specific assessment and selection of the supporting platforms and load dimensions and conditions so that they are selectively arranged within the storage system with proper compatibility.

In addition, these same particular different geometries sometimes involve a possible non stability or incompatibility in the final positioning of the load.

As such, there is an evident need for a method and system to place a load and its portable transport platform in a way that ensures structural integrity, stability, dimensional compatibility and that it's able to maintain its form and function in its final positioning and also select the most suitable and optimized place (minimizing usage of storage volume) in a specific storage racking system or alike in a warehouse.

### Summary of the invention

The present invention provides a method for executing a dimensioning, stability, positioning and orientation analysis of a portable transport platform and its respective load in a storage system, and comprising the following steps:
- Portable transport platform analysis, which in turn comprises:
   - Establishing the dimensions, position, orientation and handling entry points of the portable transport platform,
   - Evaluation of conditions of the portable transport platform.
- Load analysis, which in turn comprises:
   - Establishing the volume, contour, position and orientation of the load,
   - Evaluation of load stability.
- Engaging, transporting and storing the load after and using these previous analysis.

In addition, the establishing or definition of the dimensions, position, orientation and handling entry points of the portable transport platform comprises a generation of points cloud of coordinates of the outer contour and boundary edges of the portable transport platform, where from this points cloud dimensional parameters are extracted.

Alternatively, the evaluation of conditions of the portable transport platform comprises a processing of the points cloud enabled to identify deformations, missing elements, or damaged zones, where the surface irregularities and breakage are detected using either a combination of pattern recognition and deviation analysis against reference models, and/or the detection of gaps/voids in the sound structure.

Alternatively, the portable transport platform analysis is an iterative process applied to different layers or sections of the points cloud.

Preferably, the establishing of the volume, contour, position and orientation of the load comprises generating a points cloud of the load from which the total volume and external contours and position and orientation of the load are computed.

Alternatively, the contour and boundary edges of the load volume are set by averaging the corresponding coordinates of the points cloud defined as start and end locations on each coordinates direction.

Alternatively, the load analysis also comprises the assessment of the profile and the symmetry of the load to evaluate whether it fits within a specific storage constraints.

Alternatively, the evaluation of the load fitting within specific storage constraints comprises matching a contour load with predefined or real-time measured rack storage dimensions to ensure dimensional compatibility with the storage rack system in a warehouse or alike.

In addition, the establishing of the volume, contour, position and orientation of the load, the most suitable and safe location for storage of the load in the storage system is selected.

Preferably, the evaluating of load stability is performed by analysing the distribution of the load within a generated 3D point cloud.

Alternatively, the point cloud is divided into small control surfaces, which can be defined as contour areas.

Alternatively, the point cloud is divided into small control surfaces, which can be defined as lengths.

In addition, the top surface area is compared with the bottom surface area, and if the top surface area exceeds the bottom surface area by a predefined threshold ratio, which may involve other variables such as orthogonal distance between control surfaces, the load is classified as unstable.

In addition, vertical column segments are evaluated, and if a reduction in the ratio between the lower segment length compared to the upper segment length (in which the ratio may involve other variables such as orthogonal distance between control lengths) is detected to exceed a predefined threshold ratio, the load is classified as unstable.

Alternatively, the evaluating of load stability is performed by detection of gaps within the load structure.

Alternatively, the detection of gaps within the load structure is performed using point cloud void identification methods, identifying empty zones or inconsistencies between stacked units by analising point density and continuity.

Alternatively, the evaluating of load stability is an iterative process applied to different layers or sections of the points cloud.

Method according to any of the previous claims, where this method enabled to use at least a 2D/3D scanner laser, vision camera or similar sensor for portable transport platform analysis and load analysis.

Preferably, the portable transport platform analysis and the load analysis are performed by a scanning carried out by at least a 2D/3D scanner laser, vision camera or similar sensor.

Preferably, the portable transport platform is a pallet, crate, cradle, box, frame, or similar.

The present invention also provides a load dimensioning control system, enabled for executing a dimensioning, stability, positioning and orientation analysis of a portable transport platform and its respective load in a storage system, comprising:
- At least a 2D/3D scanner laser, vision camera or similar sensor, enabled for scanning and dimensioning a load and its supporting structure.
- Mechanical means enabled to handle a load and its supporting structure and equipped with a load engagement means, wherein said mechanical means are rotating in relation to a vertical axis.
- Control means linked with the 2D/3D scanner laser, vision camera or similar sensor and linked with the mechanical means, and with capability of government over both of them.

Preferably, the control means incorporate an algorithm or program enabled to process the information from the 2D/3D scanner laser, vision camera or similar sensor.

Alternatively, the load engagement means comprise forks.

Alternatively, the portable transport platform is a pallet, crate, cradle, box, frame, or similar.

Preferably, the load dimensioning control system is enabled to be mounted on-board a load handling vehicle.

In addition, the load dimensioning control system is enabled to execute any method previously described.

The present invention also provides an algorithm or logic controller or computer program configured to implement any method previously described.

It is not known the existence of a forklift truck or stacker crane (in any form or variety, either manual or automated) for use on very narrow aisle storage racking incorporating an automated on-board load lifting attachment being able to measure the pallet load dimensions and identify load patterns whilst picking the load from any position.

The method or system of the invention enhances operational efficiency and optimizes operational time by minimizing the number of handling and movement operations within the storage system. This streamlining of processes accelerates workflow, reduces labor costs, and minimizes the potential for errors, leading to a more efficient and cost-effective warehousing solution.

The method or system of the invention optimizes space by eliminating the need for additional areas to size the load. This efficient use of space enhances the overall storage capacity and reduces the footprint required for operations. By streamlining the spatial requirements, the system not only maximizes storage density but also contributes to a more organized and cost-effective warehousing solution.

The method or system of the invention reduces the risk of load falling during lifting/handling operations from the ground or the storage system by utilizing an advanced load recognition system. The system enhances safety by accurately identifying and adjusting to the load's characteristics, thereby minimizing the chances of mishandling or imbalance. Consequently, this leads to safer and more reliable handling processes, contributing to a more secure and efficient warehousing environment.

The method or system of the invention allows that the load engagement means adjusts positioning of handling means to different portable transport platforms sizes and entry openings, according to the data and results from the analyses, therefore allowing handling multiple transport platforms types and sizes.

### Brief description of the figures

The above and other advantages and features will be more fully understood following this detailed description of some example embodiments with reference to the attached drawings. These should be considered illustrative and not limiting.
- Fig. 1 and 2 are examples of points cloud after a 3D scan of a front plane on portable transport platform (pallet) and start and end definition for the solid component and engagement locations (voids) in a specific orthogonal XY plane.
   - Fig. 3 is an example of front plane on portable transport platform (pallet) considered for analysis of dimensions and engagement locations (voids in sound structure).
   - Fig. 4 is a top view example of points cloud after a 3D scan of a portable transport platform considered for analysis of condition, integrity and structural soundness.
- Fig. 5 is an example of an iterating process applied in different layers or sections of the points cloud, in relation to load supporting means (pallet) scan for structural soundness.
- Fig. 6 is an example of points cloud after a 3D scan of the load boundaries in the three-coordinate system.
- Fig. 6a shows unstable loads patterns examples.
- Fig. 6b shows a possible example of working of the method of the invention.
- Fig. 6c and 6d show an example of a possible arrangement of the load engagement means.
- Fig. 6e and 6f show an example of the placing and working of the 2D/3D laser scanners, vision cameras or sensors alike.
- Fig. 7 is an example of points cloud in XY plane discretized in n planes considered for analysis of load stability.
- Fig. 8, 9 and 10 are examples of discretizing points cloud in XY, XZ and YZ planes respectively considered for analysis.
- Fig. 11 is an example of an iterating process applied in different layers or sections of the points cloud in a load scan for stability analysis.

### Detailed description of the preferred embodiment

In the following detailed description, numerous specific details are presented in the form of examples to provide a thorough understanding of the relevant teachings. However, it will be apparent to those skilled in the art that the present teachings can be practiced without such details.

All the figures refer to a same embodiment of the present invention without this embodiment being limiting.

The method for executing a dimensioning, stability, positioning and orientation analysis of a portable transport platform and its respective load in a storage system of the invention, in its general description, comprises the following steps:
- Portable transport platform analysis, which in turn comprises:
   - Establishing the dimensions, position, orientation and handling entry points of the portable transport platform,
   - Evaluation of conditions of the portable transport platform.
- Load analysis, which in turn comprises:
   - Establishing the volume, contour, position and orientation of the load,
   - Evaluation of load stability.
- Engaging, transporting and storing the load after and using previous analysis.

In this embodiment of the invention, the portable transport platform is a pallet, crate, cradle, box, frame, or similar. Also, the establishing the dimensions, position, orientation and entry points of the portable transport platform (pallet) comprises a generation of a points cloud of coordinates of the outer contour and boundary edges of the portable transport platform (pallet), and from this point cloud, dimensional parameters are extracted.

The pallet is scanned using 2D/3D laser scanners, vision cameras or sensors alike to establish the 2D/3D point cloud of coordinates of the external boundaries and contour edges of the pallet.

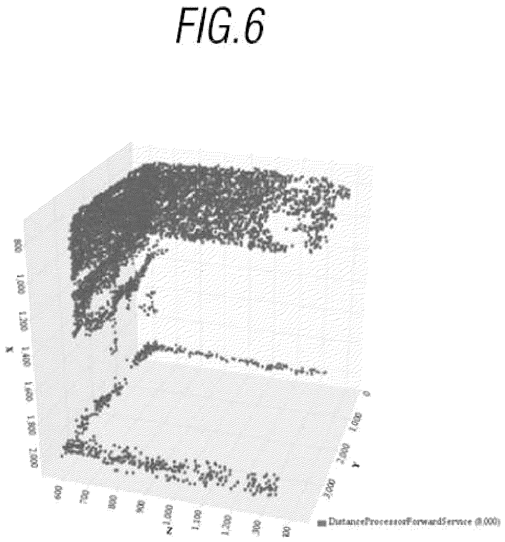

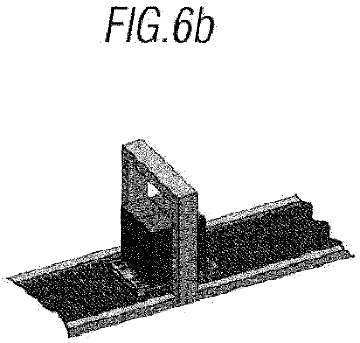

In different possible embodiments of the invention, the method may involve passing the pallet through a designated area equipped with sensors, such as it is showed in a possible example of the figure 6b. In different embodiments of the invention, the method begins by moving the pallet toward the assigned area. This can be done using a conveyor belt or a mechanical forklift, 2D/3D laser scanners, vision cameras or sensors alike are strategically positioned to check and assess various aspects of the load.

As a result, it is generated a points cloud of coordinates of the outer contour and boundary edges of the pallet. From this point cloud, dimensional parameters are extracted using geometric analysis algorithms.

The contour of the pallet is segmented, and the control algorithm locates the handling (forklift) entry points of the pallet with or without the need for any standardized pallet patterns.

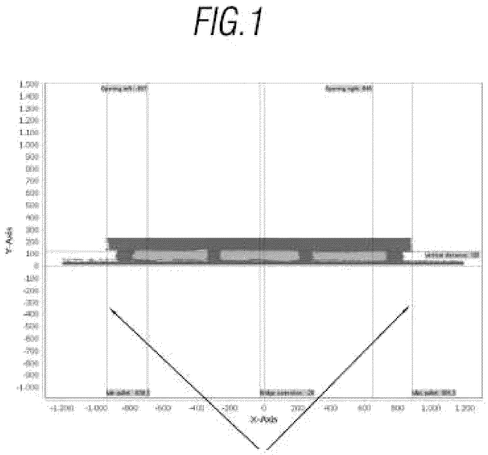

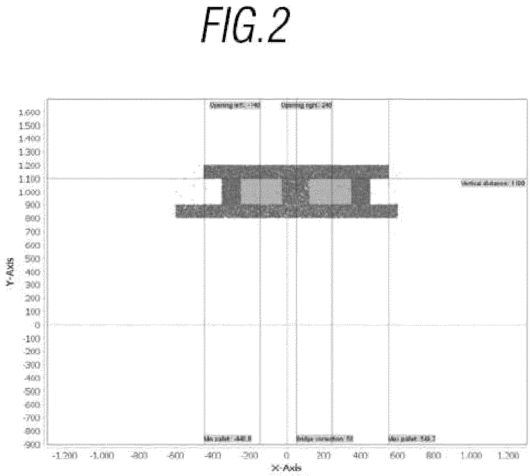

At figures 1 and 2 may be observed an example of use for a pallet dimension detection from a scan in a specific orthogonal XY plane, wherein the first identification is made from left and right boundaries of the point cloud on that plane, with a points cloud after a 3D scan of a front plane on portable transport platform and start and end definition for the solid component and engagement locations (voids) in blue colour.

This is achieved by scanning along the X-axis and counting the number of points close to a particular position. When the point count reaches a predefined threshold figure, that location is considered the start or end of the pallet. These positions define the horizontal limits and allow for calculation of the pallet's total width.

Alternative methods could be envisaged in the Y-direction of the same XY plane or from corresponding directions from other orthogonal planes (XZ or YZ) or generally any other plane.

The arrows of figure 1 point out the start and end of pallet sound structure, averaging points cloud at each end.

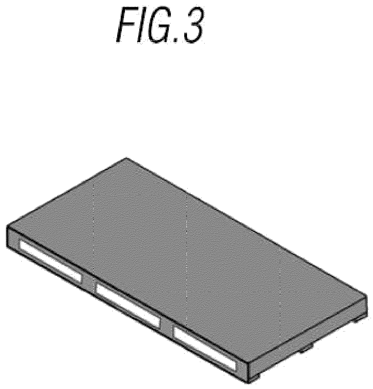

The figure 3 is an example of front plane on portable transport platform, for example a pallet, considered for analysis of dimensions and engagement locations (voids in sound structure).

Once the pallet width is identified, next step is to detect the characteristic gaps/voids between solid structure sides. A square/rectangular scanning window is scanned across the point cloud within the defined pallet region. Areas where the window contains no points-or very few-are treated as potential gaps/voids. The window is then expanded in all directions of the XY plane (left, right, up, and down) until points are encountered on each side. This helps accurately define the void's size and shape within the solid structure (rectangles in blue colour on the figures 1 and 2).

Alternative methods could be envisaged in other orthogonal planes (XZ or YZ) or generally any other plane.

The same analysis algorithm applied onto at least two different orthogonal faces allows determining position and orientation in the three-dimensional coordinate system of the portable transport platform within the load lifting attachment.

This method also enables extraction of additional useful data such as corrections in position and orientation of the load engagement means and load handling system prior to properly pick and retrieve the portable transport platform, in this embodiment a pallet. This ensures compatibility with the handling system and allows for optimal load engagement means, for example forks insertion.

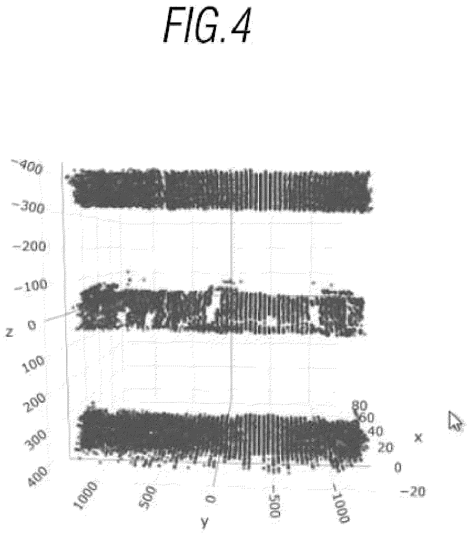

In this method, the evaluation of conditions of the portable transport platform comprises a processing of the cloud of points enabled to identify deformations, missing elements, or damaged zones, and the surface irregularities and breakage are detected using either a combination of pattern recognition and deviation analysis against reference models, and/or the detection gaps/voids in the sound structure, ensuring the pallet is safe and structurally sound for further handling, such as it may be observed in the figure 4 with a top view example of points cloud after a 3D scan of a portable transport platform considered for analysis of condition and structural soundness.

This figure 4 also shows an example of use for a pallet dimension detection from a scan in a specific orthogonal YZ plane.

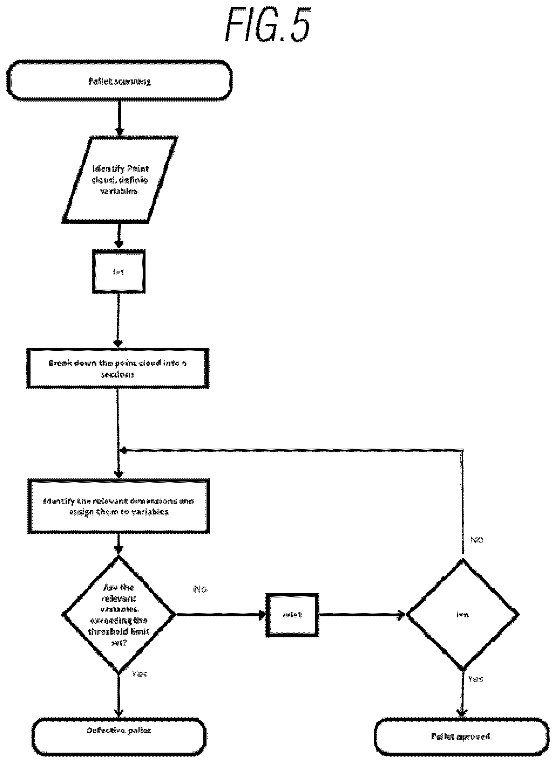

About this, the portable transport platform analysis may comprise an iterating process applied in different layers or sections of the points cloud, such as it may be observed in the example of the figure 5 in a load supporting means (pallet) scan for structural integrity, stability and soundness.

Moreover, to establishing the volume, contour, position and orientation of the load, it is generated a point cloud of the load, from which it is computed the total volume and external contours and position using a specific algorithm or program in the three dimensions to determine overall length, width and height. Contour edges of the load volume may be set by averaging the corresponding coordinates of the points cloud defined as start and end locations on each coordinates direction.

The same analysis algorithm applied onto at least two different orthogonal faces allows determining position and orientation in the three-dimensional coordinate system of the load within the load lifting attachment.

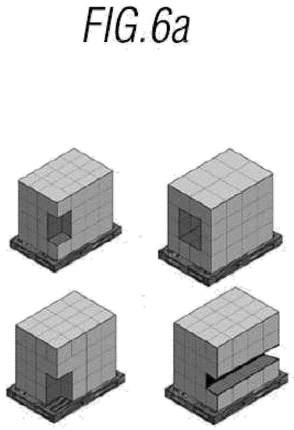

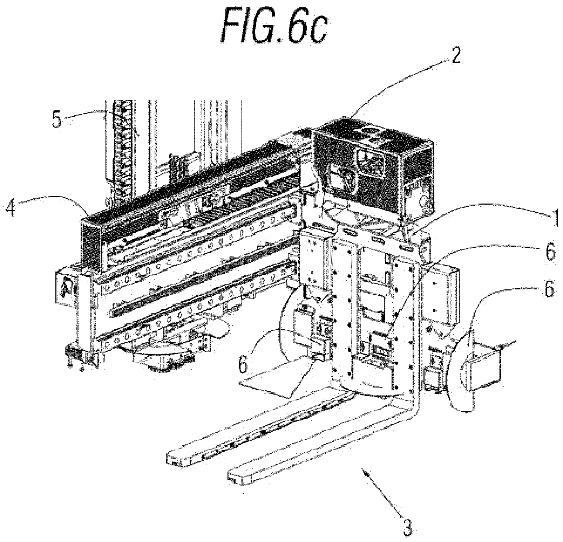

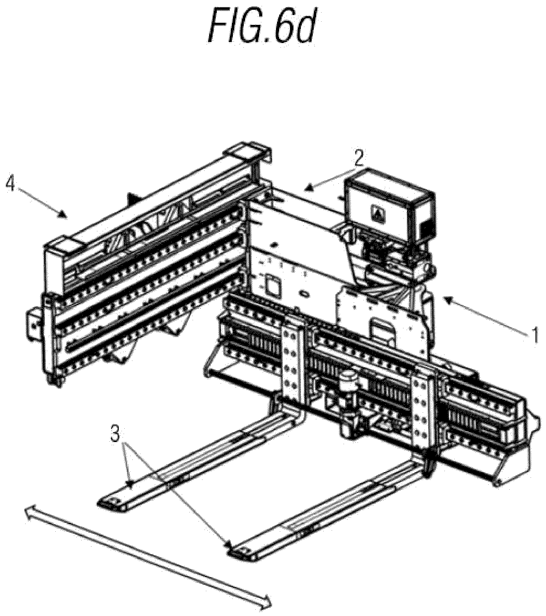

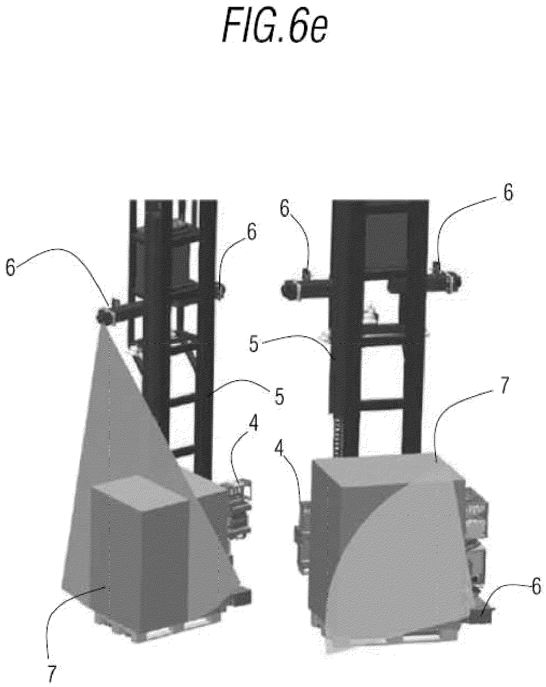

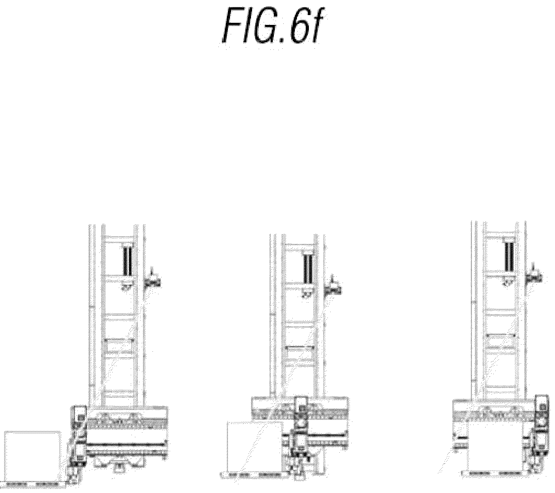

In this sense, the figure 6 shows an example of points cloud after a 3D scan of the load boundaries in the three-dimensional coordinate system.

It is evaluated the stacking profile and symmetry of the load to assess how well it fits within specific storage constraints. Contour matching with predefined or real-time measured rack storage dimensions is also performed to ensure dimensional compatibility with the storage system. Based on this analysis, it may be selected the most suitable and safe location for storage, optimizing space utilization and misalignment during placement.

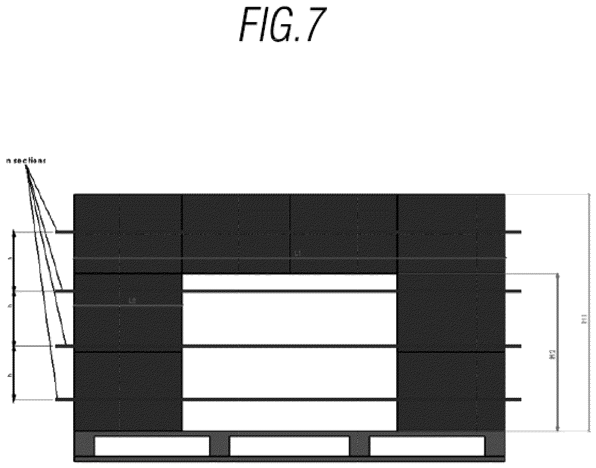

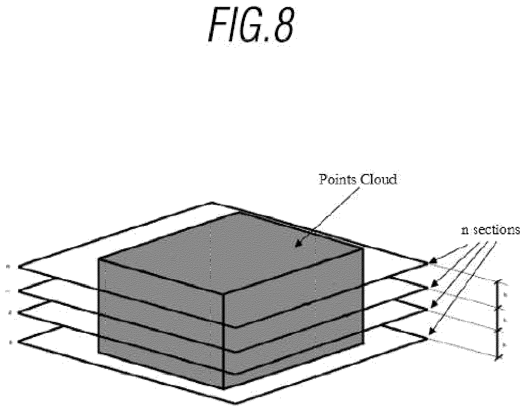

About the evaluation of load stability, it is assessed by analysing the distribution of the load within the generated 3D point cloud. The algorithm divides the cloud into small control surfaces, which can be defined as contour areas or lengths depending on the analysis required, such as it may be observed in the figure 7 and 8, wherein it is showed examples of points cloud in XY plane discretized in n planes considered for analysis of load stability.

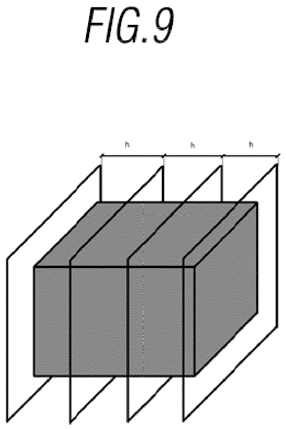

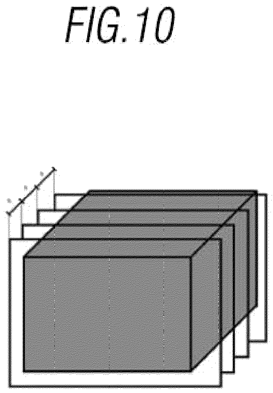

Alternative methods could be envisaged in other orthogonal planes (XZ or YZ) or generally any other plane, such as it may be observed at the figures 9 and 10 respectively.

For area-based control surfaces, the method may compare the top surface area with the bottom surface area. If the top area exceeds the bottom area by a predefined thresholdratio, which may involve other variables such as orthogonal distance between control surfaces, the load is classified as unstable.

Similarly, in length-based assessments, vertical column segments are evaluated. A noticeable reduction in the ratio between the lower segment length compared to the upper segment, in which the ratio may involve other variables such as orthogonal distance between control lengths, indicates a possible top- heavy or unstable configuration.

In relation to the above explanations, the figure 6a shows unstable loads patterns examples.

Additionally, it may be performed gap detection within the load structure using point cloud void identification methods. It identifies empty zones or inconsistencies between stacked units by analysing point density and continuity, which may compromise load integrity for safe handling.

All calculated variables are integrated into a stability scoring model, which quantifies the risk level during handling and storage operations. This score directly influences load engagement decisions used in the method.

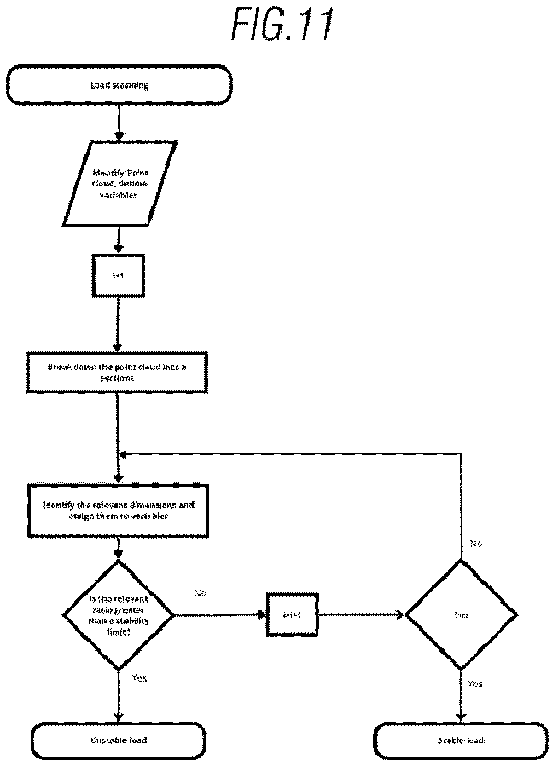

Also, such as it may be observed in the example of the figure 11, the evaluating of load stability explained may be executed in an iterating process applied in different layers or sections of the points cloud.

After all steps explained, and considering the results from the above analysis, it is carried out an engaging, transporting and storing the load in the storage system.

In the method of the invention, it is initiated a preliminary scan prior to engaging with the load. During the handling process, whether positioning the load onto the racking system or retrieving it, the system conducts a thorough scan using cameras, precision sensors, or 3D scanners. This continuous scanning process ensures accurate and complete dimensioning of the load, after the dimensioning process a pattern recognition software ensures that the load is stable and ready to be manipulated in the proper way.

The method of the invention also provides for the use of the particular and characteristic data of the storage system and its possible locations and details to placing different loads (location sizes, geometry, etc.).

According to this, the method also includes process and compare data jointly with the results of the above analysis, and as a result of this comparison to select the most suitable, optimized and safe location of the storage system according to the results of each portable transport platform analysis and the results of load analysis (size of load, geometry, stability, etc.).

After these calculations and as a result, it may be deposit the load in a suitable location selected, thus engaging, transporting and storing the load in an suitable, optimized (minimizing usage of storage volume) and safe place of a storage system.

The invention also includes a load dimensioning control system, which may perform the method explained previously.

This load dimensioning control system is enabled for executing a dimensioning, stability, positioning and orientation analysis of a portable transport platform and its respective load in a storage system, and it comprises:
- At least a 2D/3D scanner laser, vision camera or similar sensor, enabled for scanning and dimensioning a load and its portable transport platform.
- Mechanical means enabled to handle a load and its portable transport platform and equipped with a load engagement means, wherein said mechanical means are rotating in relation to a vertical axis,
- Control means linked with the 2D/3D scanner laser, vision camera or similar sensor and linked with the mechanical means, and with capability of government or control over both of them.

The load engagement means may present different arrangements for its working.

In this embodiment, the load engagement means may comprise forks enabled to pick and handle a portable transport platform as a pallet, crate, cradle, box, frame, or similar.

Such as it is showed in a possible example of the figures 6c and 6d, the load engagement means may present the following arrangement, with a pivoting body 1, a side carriage 2, a telescopic fork member 3, and a vertical carriage 4.

The pivoting body 1 is around a vertical axis and mounted onto the side carriage 2.

The telescopic fork member 3 is mounted onto the pivoting body 1, and comprised of a fork body, an outside sleeve running along the fork body and a powered belt or chain, that works thanks to a geared motor placed close to the stated fork body that powers a belt or a chain, the belt or chain connected to the mentioned sleeve in the direction of the fork body by metal pins/bolts or similar, allowing for a telescopic fork fully powered also in its width such as may be deduced observing the arrow of the figure 6d.

The vertical carriage 4 is mechanically connected to a mast 5 and movable in a vertical direction along the mast 5.

The side carriage 2 is mechanically connected to the vertical carriage 4, and the side carriage 2 is extended perpendicularly to the vertical carriage 4 and being moveable in a horizontal direction along the vertical carriage 4.

The 2D/3D scanner laser 2D/3D, vision camera or similar sensors 6 are placed strategically in relation to the load engagement means in order to get an accurate dimensioning of the load 7. At figures 6e and 6f is showed an example of placing to work.

This load dimensioning control system is specifically enabled to be mounted on-board a load handling system, vehicle, crane or alike, or other kind of artifact to load.

Moreover, the control means incorporates an algorithm or program enabled to process the information from the 2D/3D scanner laser, vision camera or similar sensor.

This arrangement of the load dimensioning control system of the invention allows the mechanical means are enabled to position the load engagement means, for example forks, anywhere within a storage aisle and to pick up, rotate, and deposit loads from both sides of the aisle in a multiple storage racking system.

Accordingly it has been explained previously in relation to preceding method included in the same invention, the load dimensioning control system of the invention performance a scanning of the portable transport platform, for example a pallet, and the own load using 2D/3D laser scanners, vision cameras or sensors.

Data registered in this scanning are communicated to control means, which through an algorithm or program incorporated establish a 2D/3D point cloud of coordinates of the external boundaries and contour edges of the pallet and the load, such as it may be observed in the examples of the figures 1, 2 and 6.

Also, the point cloud is discretized into multiple variables in both horizontal and vertical planes, such as it may be observed in the examples of the figures 7, 8, 9 and 10.

These discretized data are analysed, processed or compared by the control means and its algorithm or program incorporated to assess configuration of the load, position, orientation, stability, and also the portable transport platform (pallet) condition and its handling, thus carry out a portable transport platform analysis and a load analysis.

Data and results of portable transport platform analysis, with a definition or establishing of dimensions, position, orientation and handling entry points of the portable transport platform, and evaluation of conditions of the portable transport platform, and data and results of load analysis, with definition or establishing of the volume, contour, position and orientation of the load, and evaluation of load stability, are all of them processed and used by the control means.

Also, the particular and characteristic data of the storage system and its possible locations and details to placing different loads (sizes, geometry, etc.) may be introduced manually or communicate to the control means or the same load dimensioning control system can capture that information in automated mode using the same or similar 2D/3D scanner laser, vision camera or other sensors alike and similar control algorithms.

Therefore, the own control means may process and compare that data jointly with the information and results of the above analysis, and to select the most suitable location of the storage system according to the results of each portable transport platform analysis and the results of load analysis (size of load, geometry, stability, etc.).

After these calculations and as a result, the control means may govern the mechanical means to move the load with its portable transport platform (pallet), and using also the load engagement means or forks, deposit it in a suitable location, thus engaging, transporting and storing the load in a suitable, optimized (minimizing usage of storage volume) and safe place of a storage system.

In a further alternative the load engagement means may comprise adjustable positioning mechanism to adjust forks to different pallet sizes and pallet openings, according to the data and results from the analyses.

The same invention also includes a specific algorithm or a logic controller or program of computer incorporated in the control means to performance the previous method, and also the load dimensioning control system may performance the working explained.

In the method and system of the invention, it is initiated a preliminary scan prior to engaging with the load. During the handling process, whether positioning the load onto the racking system or retrieving it, the system conducts a thorough scan using cameras, precision sensors, or 3D scanners. This continuous scanning process ensures accurate and complete dimensioning of the load, after the dimensioning process a pattern recognition software ensures that the load is stable and ready to be manipulated in the proper way.

The invention purposed is enabled to a load lifting for use in combination with forklift trucks or stacker cranes for stacking and retrieving loads from a multiple-deep (commonly double-deep and triple-deep) very narrow aisle storage racking systems, in which the load lifting result able to rotate around vertical axis the load engagement means (forks) at any position within the storage aisle, and capable of picking, rotating and depositing pallets/loads from both sides of the aisle in the multiple-deep (commonly double-deep and triple-deep) storage racking system.

In a warehouse management system, a pattern recognition algorithm is crucial for optimizing material handling and storage operations. The system must accurately classify and differentiate between diverse load types, such as pallets, cartons, and irregularly shaped items. This involves using machine learning models and computer vision techniques to analyze and interpret visual data from sensors and cameras.

The dimensioning of a pallet in a storage system is critical, this invention enables the optimization of available space within a warehouse by implementing advanced inventory management techniques and space utilization strategies. This invention ensure that the physical storage area is used efficiently, maximizing the capacity for storing pallets and loads and involves continuously analyzing inventory levels and movement patterns to determine the best locations for storing different items. By placing fast-moving items in easily accessible locations and slower-moving items in less accessible areas, the invention reduces travel time and maximizes space use.

## Claims

1. Method for executing a dimensioning, stability, positioning and orientation analysis of a portable transport platform and its respective load in a storage system, and comprising the following steps:
- Portable transport platform analysis, which in turn comprises:
∘ Establishing the dimensions, position, orientation and handling entry points of the portable transport platform,
∘ Evaluation of conditions of the portable transport platform.
- Load analysis, which in turn comprises:
∘ Establishing the volume, contour, position and orientation of the load,
∘ Evaluation of load stability.
- Engaging, transporting and storing the portable transport platform and load after and using these previous analyses.

2. Method according to claim 1, wherein the establishment of the dimensions, position, orientation and handling entry points of the portable transport platform comprises a generation of points cloud of coordinates of the outer contour and boundary edges of the portable transport platform, where from this points cloud dimensional parameters are extracted.

3. Method according to claim 2, wherein the evaluation of conditions of the portable transport platform comprises a processing of the points cloud enabled to identify deformations, missing elements, or damaged zones, where the surface irregularities and breakage are detected using either a combination of pattern recognition and deviation analysis against reference models, and/or the detection of gaps/voids in the sound structure.

4. Method according to claim 3, wherein the portable transport platform analysis is an iterative process applied to different layers or sections of the points cloud.

5. Method according to any of the previous claims, wherein the establishment of the volume, contour, position and orientation of the load comprises generating a points cloud of the load from which the total volume and external contours and position and orientation of the load are computed.

6. Method according to claim 5, wherein the contour and boundary edges of the load volume are set by averaging the corresponding coordinates of the points cloud defined as start and end locations on each coordinate direction.

7. Method according to claim 5 or 6, wherein the load analysis also comprises the assessment of the load profile and the symmetry of the load to evaluate whether it fits within specific storage constraints, and the evaluating of the load fitting within specific storage constraints comprises matching a contour load with predefined or real-time measured rack storage dimensions to ensure dimensional compatibility with the storage system in a warehouse.

8. Method according to any of the previous claims, wherein after the establishment of the volume, contour, position and orientation of the load, the most suitable, optimized, and safe location for storage of the load in the storage system is selected.

9. Method according to any of the previous claims, wherein the evaluation of load stability is performed by analysing the distribution of the load within a generated 2D/3D point cloud in the coordinate system.

10. Method according to claim 9, wherein the point cloud is divided into small control surfaces, which can be defined as contour areas, and wherein the top surface area is compared with the bottom surface area, and if the top surface area exceeds the bottom surface area by a predefined threshold factor ratio, which may involve other variables such as vertical distance between control surfaces, the load is classified as unstable.

11. Method according to claim 9, wherein the point cloud is divided into small control surfaces, which can be defined as lengths, and wherein vertical column segments are evaluated, and if a reduction in the ratio between the lower segment length compared to the upper segment length, (in which the ratio may involve other variables such as vertical distance between control lengths), is detected to exceed a predefined threshold factor, the load is classified as unstable.

12. Method according to any of the previous claims, wherein the evaluating of load stability is performed by detection of gaps within the load structure, and wherein the detection of gaps within the load structure is performed using point cloud void identification methods, identifying empty zones or inconsistencies between stacked units by analising point density and continuity.

13. Method according to any of the previous claims 10 to 12 when which are depending on claim 9, wherein the evaluating of load stability is an iterative process applied to different layers or sections of the points cloud.

14. Method according to any of the previous claims, wherein the portable transport platform analysis and the load analysis are performed by a scanning carried out by at least a 2D/3D scanner laser, vision camera or similar sensor.

15. Method according to any of the previous claims, wherein the portable transport platform is a pallet or similar.

16. Load dimensioning control system, enabled for executing a dimensioning, stability, positioning and orientation analysis of a portable transport platform and its respective load in a storage system, comprising:
- At least a 2D/3D scanner laser, vision camera or similar sensor, enabled for scanning and dimensioning a load and its supporting structure.
- Mechanical means enabled to handle a load and its supporting structure and equipped with a load engagement means, wherein said mechanical means are rotating in relation to a vertical axis, and wherein the load engagement means comprise forks.
- Control means linked with the 2D/3D scanner laser , vision camera or similar sensor and linked with the mechanical means, and with capability of government over both of them, and wherein the control means incorporate an algorithm or logic controller or a program enabled to process the information from the 2D/3D scanner laser 2D/3D, vision camera or similar sensor.

17. Load dimensioning control system according to claim 16 , enabled to be mounted on-board a load handling vehicle or an artifact to load.

18. Load dimensioning control system according to any of the claims 16 to 17, enabled to execute a method of the claims 1 to 15.
